(19) Europäisches Patentamt
European Patent Office
Office européen des brevets

(11) Publication number: **0 329 105 B1**

(12) # EUROPEAN PATENT SPECIFICATION

(45) Date of publication of patent specification: **07.07.93** (51) Int. Cl.$^5$: **C08G 69/16**

(21) Application number: **89102588.4**

(22) Date of filing: **15.02.89**

(54) **Molecular weight controller for polymerization of lactams to polyamides.**

(30) Priority: **16.02.88 US 156396**

(43) Date of publication of application:
**23.08.89 Bulletin 89/34**

(45) Publication of the grant of the patent:
**07.07.93 Bulletin 93/27**

(84) Designated Contracting States:
**AT BE CH DE ES FR GB GR IT LI LU NL SE**

(56) References cited:
**US-A- 4 574 054**

**CHEMICAL ABSTRACTS, vol. 96, no. 4, 25th January 1982, page 3, abstract no. 20506e, Columbus, Ohio, US; J. KRALICEK et al.: "Effect of amides on anionic polymerization of 6-caprolactam"**

**CHEMICAL ABSTRACTS, vol. 84, no. 6, 9th December 1976, page 29, abstract no. 31886g, Columbus, Ohio, US; L.N. MIZEROVSKII et al.: "Structure of molecular-weight regulator and regularities of postcondensation of polycaproamide"**

(73) Proprietor: **BASF Corporation**
**P.O. Drawer "D"**
**Williamsburg, Virginia 23187(US)**

(72) Inventor: **Dellinger, Jack Anderson**
**5 Salem Acres**
**Weaverville, N.C. 28787(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 329 105 B1

## Description

### BACKGROUND OF THE INVENTION

1. Field of the Invention

This invention relates to molecular weight controllers useful in the polymerization of lactams of polyamides, which find particular application in the melt-spinning of filamentary structures.

2. Description of the Prior Art

Fibers comprised of polyamides, especially poly(epsiloncaprolactam), otherwise known as nylon 6, find widespread commercial use in view of their highly desirable physical, chemical, and aesthetic qualities.

The term "fiber" as used herein includes fibers of extreme or indefinite length (i.e., filaments) and fibers of short length (i.e., staple). The term "yarn" as used herein means a continuous strand of fibers.

Fibers of polyamides, including those of nylon 6, are usually prepared by the melt extrusion of molten polyamide through spinnerette plates containing small-dimensioned orifices. A common procedure for producing the polyamides and, in particular, nylon 6, involves the polymerization of epsiloncaprolactam at sufficient temperatures and in the presence of water which serves to initiate the polymerization. Polymers prepared in this manner, however, usually contain more than 10 percent water extractable material which usually comprises caprolactam monomers and linear and cyclic oligomers. The oligomers are mainly low molecular weight cyclic condensation products of epsiloncaprolactam. The presence of such water extractable material has an adverse effect on the performance of the polymer in the extrusion shaping of fibers and even larger-dimensioned articles such as pipes. To produce fibers having satisfactory physical properties, the water extractable content, which consists of oligomers and monomers (epsilon-caprolactam), should be less than 2.5 percent by weight of the polymer. The monomer content should be less than 0.5 percent by weight of the polymer.

Various procedures have been utilized to remove water extractable materials from polyamides prior to their melt spinning. The most common approach involves the hot water leaching of the nylon 6 in granular form to remove water extractable material, followed by thorough drying prior to its melt extrusion. Another technique employed has been to subject molten nylon 6, generally in the form of thin films or shallow layers, to an extremely high vacuum, which removes the relatively volatile epsiloncaprolactam monomer but has only a minor effect on the less volatile oligomer materials. Such purification techniques involve additional processing steps with an attendant increased manufacturing cost. In addition, regardless of the purification technique applied to the nylon 6, once the reaction mass is no longer under the influence of vacuum, the monomer can reform at high temperature within the polymer prior to spinning.

In order to reduce the extra manufacturing costs involving purifying polyamides, i.e., poly-(epsiloncaprolactam), various procedures have been proposed for the continuous production of caprolactam having a reduced amount of water extractable material. Such procedures include, for example, the addition to the polymerization reaction of an organic acid material, or an organic basic material or combinations thereof as molecular weight controllers or chain terminators.

As described in United States Patent 4,574,054, in order to lower the formation rate of water extractable materials, it is necessary to synthesize polyamides having a low content of terminal amino groups. However, polymerization kinetics require a certain amount of terminal groups (both amino and carboxylic) and terminal amino groups are necessary in order to provide the polyamides with an affinity for anionic dyestuffs.

The present invention provides a molecular weight controller for polymerizing lactams to polyamides which overcomes or at least mitigates the above-described problems.

### SUMMARY OF THE INVENTION

The surprising discovery has now been made that a polyamide having a low content of water extractables and an affinity for anionic dyestuffs can be prepared using a molecular weight controller comprising a monofunctional primary amine, a monofunctional organic acid, and an aminoacid containing a cyclic structure of 5 or 6 carbon atoms and having its amino groups salified by an acid.

The polyamides and, in particular, nylon 6, prepared utilizing the molecular weight controllers of the present invention have a terminal amino-group content in the range of from about 22 to 42 equiv/$10^6$ g and a terminal carboxylic group content in the range of from about 18 to 24 equiv/$10^6$ g. Generally, the water

extractable content is less than 0.7% by weight of polyamide, including a monomer content of less than 0.25% and an oligomer content of less than 2.0%. Thus, a commercial polyamide is produced having excellent affinity with anionic dyestuffs. The polyamides find particular use as yarns in textile applications.

The precise manner in which the molecular weight controllers function to produce the polyamide having the desired properties is not fully understood and need not be. Although the invention is not intended to be limited to any particular theory of operation, it is believed that the cyclic structure contained in the salified aminoacid, due to its rigidity, is especially effective in preventing the formation of undesirable cyclic oligomers in addition to preventing the formation of linear oligomers and monomers. Regardless of the theory proposed, it is sufficient to point out that the molecular weight controllers operate successfully in the manner disclosed herein.

## DESCRIPTION OF THE PREFERRED EMBODIMENTS

The molecular weight controllers of the present invention comprise the following ingredients:

(1) a monofunctional primary amine having a boiling point of at least 180 °C at atmospheric pressure and a basic dissociation constant of at least $1.7 \times 10^{-5}$;

(2) a monofunctional organic acid having an acid dissociation constant of at least $1.5 \times 10^{-5}$; and,

(3) an aminoacid containing a cyclic structure of 5 or 6 carbon atoms, having a total number of carbon atoms in the range of from about 6 to about 9 carbon atoms, and having its amino group salified by a mono-functional acid having an acid dissociation constant of at least $1.0 \times 10^{-2}$.

Examples of preferred monofunctional primary amines include primary aliphatic amines such as nonylamine, decylamine, and dodecylamine, and primary aromatic amines and derivatives of said amines which are substituted in the ring, such as benzylamine, α-phenylethylamine, and β-phenylethylamine, and mixtures thereof.

Examples of preferred monofunctional organic acids include monofunctional aliphatic carboxylic acids containing at least 2 carbon atoms, such as acetic acid, propionic acid, n-butyric acid, isobutyric acid, n-valeric acid, trimethylacetic acid, caproic acid, and pelargonic acid, and monofunctional aromatic acids such as benzoic acid and napthionic acid, and mixtures thereof.

Examples of aminoacids corresponding to ingredient (3) include aminoacids containing an aromatic, cyclohexane, or cyclopentane moiety. Examples of preferred aminoacids include aminocyclohexanecarboxylic acids such as compounds represented by the following formula:

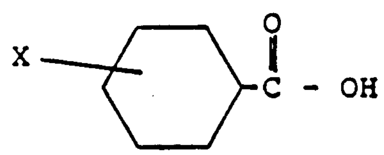

I

wherein:

X is $H_2N$- or $NH_2R^1$-, $R^1$ is methylene or ethylene, and X occupies one of the two 3 positions or the 4 position with respect to the carboxylic acid moiety.

Examples of compounds corresponding to formula I include trans-1,4-aminocyclohexanecarboxylic acid, cis-1,4-aminocyclohexanecarboxylic acid, trans-1,3-aminocyclohexanecarboxylic acid, cis-1,3-aminocyclohexanecarboxylic acid, cis-1(aminomethyl)-3-cyclohexanecarboxylic acid, trans-1(aminomethyl)-3-cyclohexanecarboxylic acid, cis-1(aminoethyl)-3-cyclohexanecarboxylic acid, trans-1(aminoethyl-3-cyclohexanecarboxylic acid, cis-1(aminomethyl)-4-cyclohexanecarboxylic acid, trans-1(aminomethyl)-4-cyclohexanecarboxylic acid, cis-1(aminoethyl)-4-cyclohexanecarboxylic acid, trans-1(aminoethyl)-4-cyclohexanecarboxylic acid, and mixtures thereof.

Another example of preferred aminoacids comprises aminobenzoic acids represented by the following formula:

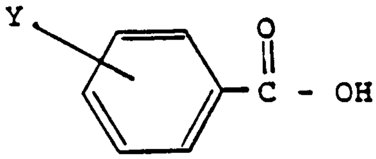

II

wherein:

Y is $H_2N$- or $NH_2R^2$-, $R^2$ is methylene or ethylene, and Y occupies the para position or one of the two meta positions with respect to the carboxylic acid moiety.

Examples of compounds corresponding to formula II include p-aminobenzoic acid, m-aminobenzoic acid, 4-(aminomethyl)benzoic acid, 4-(aminoethyl)benzoic acid, 3-(aminomethyl)benzoic acid, 3-(aminoethyl)benzoic acid, and mixtures thereof.

An example of another class of aminoacid suitable for use in the invention are aminocyclopentane carboxylic acids represented by the following formula:

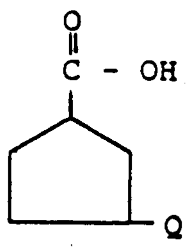

III

wherein:

Q is $H_2N$- or $H_2NR^3$-, and $R^3$ is methylene, ethylene, propylene or isopropylene.

Examples of compounds which correspond to formula III include 3-aminocyclopentanecarboxylic acid, 3-(aminomethyl) cyclopentane carboxylic acid, 3-(aminoethyl)cyclopentanecarboxylic acid, 3-(aminopencyl)-cyclopentanecarboxylic acid, 3-(aminoisopropyl)cyclopentanecarboxylic acid, and mixtures thereof.

Examples of preferred salifying acids include aromatic sulfonic acids such as p-toluenesulfonic acid, naphthalenesulfonic acid, benzenesulfonic acid, 4-methylbenzenesulfonic acid, cycloalkylsulfonic acids such as cyclohexanesulfonic acid, and acetic acid, as well as inorganic acids including hydrohalogen acids such as hydrobromic acid and hydrochloric acid, phosphoric acids such as metaphosphoric acid, and orthophosphoric acid, sulfuric acid, and mixtures thereof.

The molecular weight controllers of the present invention are particularly effective with polyamides containing some free reactive carboxylic acid groups. The term polyamide is intended to include all the linear chain polymers containing characteristic amide (-NHCO) groups. The preferred class of polyamides suitable for use in the present invention is represented by the following formula:

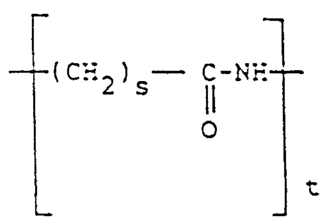

IV

wherein:

s is a positive integer and has a value from 3 to 11 and t is a positive integer and represents the number of monomer units in the polymer required to achieve the desired molecular weight.

Examples of commercially important polyamides of this class include nylon 4, nylon 11, nylon 12 and, particularly, nylon 6 (s equals 5).

The preferred molecular weight of the polyamides produced using the molecular weight controllers of the present invention will generally be a number average molecular weight in the range of from about 10,000 to about 25,000 and, more preferably, will be a number average molecular weight of from about 16,000 to about 20,000.

Generally, the amount of molecular weight controller utilized for polymerization of the lactam will be an amount in the range of from 30 equiv/$10^6$g to about 100 equiv/$10^6$g based on the weight of the polymer. More preferably, the amount will be an amount in the range of from about 35 to about 60 equiv/$10^6$g based on the weight of the polymer.

The amounts of monofunctional primary amine, monofunctional organic acid, and salified amino acid present in the molecular weight controller will vary over a wide range with no limitation. As a general rule, however, the molecular weight controller will comprise an aqueous composition containing from about 40.0 to about 60.0 mole percent monofunctional primary amine, about 15.0 to about 30.0 mole percent of monofunctional organic acid, and 20.0 to about 40.0 mole percent salified aminoacid based on the total moles of the three ingredients. More preferably, the aqueous molecular weight controller will contain about 48.0 to about 52.0 mole percent primary amine, about 18 to about 22 mole percent monofunctional organic acid, and about 28.0 to about 32.0 mole percent salified aminoacid based on the total moles of the three ingredients.

Procedures for polymerizing the lactam to form the polyamide are known to persons skilled in the art. Preferably, the polymerization reaction is carried out at a temperature in the range of from about 220° to about 280°C. The hydrolysis and polyaddition portion of the reaction is carried out at atmospheric pressure or, in other words, the normal pressure of the vessel used for this portion of the reaction and the polycondensation portion of the reaction is preferably carried out under a strong vacuum, 666 Pa (5mm of mercury) or less. The time for the polymerization is generally 5 to about 20 hours.

Thereafter, the polyamide can be vacuum extracted and then extruded to form one or more fibers. The extruded fibers are then cooled and thereafter processed (drawn, crimped, etc.) in accordance with the final application of the fibers.

Although the molecular weight controller finds particular application in a continuous process, they can also be utilized in discontinuous polymerization procedures.

In addition to molecular weight controllers, other property-modifying ingredients can be incorporated into the polyamides in any desired amount. Examples of such additives include fire-retarding agents such as antimony, phosphorus, and halogen compounds; delustrants such as titanium dioxide; antistatic agents; heat and light stabilizers such as inorganic reducing ions; transition metal ions such as $Mn^{+2}$, $Cu^{+2}$, and $Sn^{+2}$; phosphites, organic amines such as alkylated aromatic amines and ketone aromatic amine condensates; thermally stable pigments; fluorescing agents and brighteners; bacteriostats such as phenols and quaternary amines; antisoiling agents and the like. These additives can be incorporated into the polymer at any stage of the reaction, whether as concentrates distributed in the monomer or in preformed polyamide. For operational efficiency, however, the additives are preferably introduced together with the molecular weight controllers at the commencement of the process. Proper dispersion of these ingredients within the polymer is achieved by means conventional in the art.

The invention is further exemplified by the example below which is presented to illustrate certain specific embodiments of the invention, but is not intended to be construed so as to be restrictive of the scope and spirit thereof.

EXAMPLE

Tables I and II set forth the abbreviations used in the Example.

TABLE I

| Abbreviation | Chemical |
|---|---|
| CL | caprolactam |
| BAM | benzylamine |
| HAC | acetic acid |
| A/S | 4-(aminomethyl)benzoic acid salified with p-toluenesulfonic acid |

TABLE II

| Abbreviation | Measurement |
|---|---|
| RV | relative viscosity |
| CD | cyclic dimer |
| AEC | terminal amino-group content |
| COOH | terminal carboxylic group content |
| MWC | molecular weight controller |
| CL | caprolactam monomer |

Relative viscosity, which is a measure for the molecular weight of the polymer, was determined using standard procedures wherein the concentration of the measuring solution is 10g/liter, the solvent is 96 percent by weight sulfuric acid, and the measuring temperature is 25°C.

Throughout the Example, all percentages are by weight, unless otherwise specified.

The terminal amino-group content and terminal carboxylic content of the poly(caprolactam) reported in the examples was determined using standard titration procedures. The poly(caprolactam) was dissolved in hot benzyl alcohol and the amine end groups were then titrated to the thymol blue end point with methanolic HCl. The carboxylic acid end points were titrated to the Cresol red end point with methanolic NaOH.

The determination of amounts of caprolactam monomer and cyclic dimer reported in the Example was determined by gas chromatography.

A series of tests was carried out introducing 339 parts by weight caprolactam and molecular weight controllers of the present invention into a sealed vessel. The mixtures were heated to 250°C for a total period of 24 hours. Atmospheric pressure was maintained on the vessel during this time except during vacuum extraction. The vacuum extraction was carried out at a pressure of less than 133 Pa (1 mm of mercury). Next, the polycaprolactam was extruded and the impurities were extracted by means of hot water. Measurements of the impurities of the poly(caprolactam) were measured at the end of both of these steps. After the hot water extraction step, the polycaprolactam was dried to where it contained less than 500 ppm of water, introduced into a tube held under a static nitrogen blanket and heated at 260°C for periods of 30, 60, and 90 minutes. After the heating, the polymer was removed from the tube and analyzed. The results of these tests are reported in Table III.

# TABLE III

| | | EXTRUDED POLYMER ANALYSIS | | | | | ANALYSIS OF EXTRUDED, WASHED, AND DRIED POLYMER | | | | | | ANALYSIS OF POLYMER HEATED AT 260°C | | | | | | | | | | | | | |
|---|---|---|---|---|---|---|---|---|---|---|---|---|---|---|---|---|---|---|---|---|---|---|---|---|---|---|
| | | | | | | | | | | | | | 30 MINUTES | | | | | 60 MINUTES | | | | | 90 MINUTES | | | | |
| TEST NO. | MWC (g) | RV | AEC | COOH | CL(%) | CD(%) | RV | AEC | COOH | CL(%) | CD(%) | $H_2O$(%) | RV | AEC | COOH | CL(%) | CD(%) | RV | AEC | COOH | CL(%) | CD(%) | RV | AEC | COOH | CL(%) | CD(%) |
| 1 | BAM (1.83) | 2.26 | 32 | 24 | 0.08 | 0.31 | 2.31 | 34 | 21 | 0.005 | 0.03 | 0.04 | 2.26 | 24 | 24 | 0.29 | 0.07 | 2.33 | 28 | 24 | 0.48 | 0.1 | 2.33 | 27 | 22 | 0.57 | 0.11 |
| | HAC (0.78) | | | | | | | | | | | | | | | | | | | | | | | | | | |
| | $H_2O$ (3.60) | | | | | | | | | | | | | | | | | | | | | | | | | | |
| | A/S (0.97) | | | | | | | | | | | | | | | | | | | | | | | | | | |
| 2 | BAM (1.83) | 2.26 | 32 | 24 | 0.08 | 0.31 | 2.31 | 34 | 21 | 0.005 | 0.03 | 0.04 | 2.31 | 27 | 23 | 0.25 | 0.04 | 2.33 | 28 | 22 | 0.38 | 0.03 | 2.26 | 27 | 23 | 0.53 | 0.02 |
| | HAC (0.78) | | | | | | | | | | | | | | | | | | | | | | | | | | |
| | $H_2O$ (3.60) | | | | | | | | | | | | | | | | | | | | | | | | | | |
| | A/S (0.97) | | | | | | | | | | | | | | | | | | | | | | | | | | |
| 3 | BAM (1.83) | 2.33 | 32 | 20 | 0.06 | 0.19 | 2.35 | 31 | 18 | 0.01 | 0.07 | 0.038 | 2.36 | 29 | 21 | 0.17 | 0.037 | 2.36 | 30 | 21 | 0.23 | 0.041 | 2.38 | 28 | 20 | 0.66 | 0.055 |
| | HAC (0.78) | | | | | | | | | | | | | | | | | | | | | | | | | | |
| | $H_2O$ (3.60) | | | | | | | | | | | | | | | | | | | | | | | | | | |
| | A/S (0.97) | | | | | | | | | | | | | | | | | | | | | | | | | | |

## TABLE III (continued)

| TEST NO. | MWC (g) | EXTRUDED POLYMER ANALYSIS | | | | | ANALYSIS OF EXTRUDED, WASHED, AND DRIED POLYMER | | | | | | ANALYSIS OF POLYMER HEATED AT 260°C | | | | | | | | | | | | | | |
|---|---|---|---|---|---|---|---|---|---|---|---|---|---|---|---|---|---|---|---|---|---|---|---|---|---|---|---|
| | | | | | | | | | | | | | 30 MINUTES | | | | | 60 MINUTES | | | | | 90 MINUTES | | | | |
| | | RV | AEC | COOH | CL(%) | CD(%) | RV | AEC | COOH | CL(%) | CD(%) | $H_2O$(%) | RV | AEC | COOH | CL(%) | CD(%) | RV | AEC | COOH | CL(%) | CD(%) | RV | AEC | COOH | CL(%) | CD(%) |
| 4 | BAM (1.83) HAC (0.78) $H_2O$ (3.67) A/S (0.95) | 2.35 | 33 | 21 | 0.06 | 0.29 | 2.33 | 34 | 20 | 0.009 | 0.044 | 0.018 | 2.34 | 31 | 22 | 0.07 | 0.058 | 2.34 | 32 | 21 | 0.21 | 0.058 | 2.35 | 30 | 20 | 0.46 | 0.061 |

The results of the tests demonstrate the effectiveness of the molecular weight controllers of the present invention in reducing monomer and cyclic dimer content of the resulting poly(epsiloncaprolactam). Even after heating the polycaprolactam at 260°C for a period of 90 minutes, the reformation of monomers and cyclic dimer was very low.

## Claims

1. A polyamide molecular weight controller comprising:
(a) a monofunctional primary amine having a boiling point of at least 180 °C at atmospheric pressure and a basic dissociation constant of at least $1.7 \times 10^{-5}$;
(b) a monofunctional organic acid having an acid dissociation constant of at least $1.5 \times 10^{-5}$; and
(c) an aminoacid containing a cyclic structure of 5 or 6 carbon atoms, a total number of carbon atoms in the range from 6 to 9, and having its amino group salified by a monofunctional acid having an acid dissociation constant of at least $1.0 \times 10^{-2}$.

2. The molecular weight controller recited in Claim 1 wherein said aminoacid is selected from

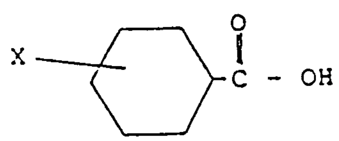

I

wherein:
X is $H_2N$- or $NH_2R^1$-, $R^1$ is methylene or ethylene, and X occupies one of the two 3 positions or the 4 position with respect to the carboxylic acid moiety;

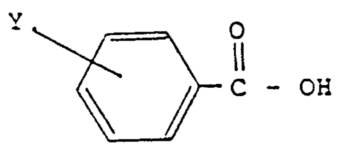

II

wherein:
Y is $H_2N$- or $NH_2R^2$-, $R^2$ is methylene or ethylene, and Y occupies the para position or one of the two meta positions with respect to the carboxylic acid moiety;

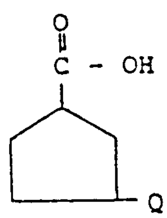

III

wherein:
Q is $H_2N$-or $H_2NR^3$-, and $R^3$ is methylene, ethylene, propylene or isopropylene; and,
mixtures thereof.

3. The molcular weight controller recited in Claim 1 or 2, wherein said salifying acid is selected from the group consisting of p-toluenesulfonic acid, naphthalenesulfonic acid, benzenesulfonic acid, 4-methylbenzenesulfonic acid, cyclohexanesulfonic acid, acetic acid, hydrochloric acid, metaphosphoric acid, orthophosphoric acid, sulfuric acid, and mixtures thereof.

4. The molecular weight controller recited in one of the preceding claims wherein said monofunctional primary amine is selected from the group consisting of nonylamine, decylamine, dodecylamine, β-phenylethylamine, ß-phenylethylamine, benzylamine, and mixtures thereof.

**5.** The molecular weight controller recited in one of the preceding claims wherein said monofunctional organic acid is selected from the group consisting of acetic acid, propionic acid, n-butyric acid, isoburyric acid, n-valeric acid, trimethylacetic acid, caproic acid, pelargonic acid, benzoic acid, napthionic acid, and mixtures thereof.

**6.** The molecular weight controller recited in one of Claims 2 to 5 wherein said amino acid is selected from the group consisting of trans-1,4-aminocyclohexanecarboxylic acid, cis-1,4-aminocyclohexanecarboxylic acid, trans-1,3-aminocyclohexanecarboxylic acid, cis-1,3-aminocyclohexanecarboxylic acid, cis-1(aminomethyl)-3-cyclohexanecarboxylic acid, trans-1(aminomethyl)-3-cyclohexanecarboxylic acid, cis-1(aminoethyl)-3-cyclohexanecarboxylic acid, trans-1(aminoethyl-3-cyclohexanecarboxylic acid, cis-1-(aminomethyl)-4-cyclohexanecarboxylic acid, trans-1(aminomethyl)-4-cyclohexanecarboxylic acid, cis-1-(aminoethyl)-4-cyolohexanecarboxylic acid, trans-1(aminoethyl)-4-cyclohexanecarboxylic acid, p-aminobenzoic acid, m-aminobenzoic acid, 4-(aminomethyl)benzoic acid, 4-(aminoethyl)benzoic acid, 3-(aminomethyl)benzoic acid, 3-(aminoethyl)benzoic acid, and mixtures thereof.

**7.** The molecular weight controller recited in one of the preceding claims wherein said monofunctional primary amine is present in an amount in the range of from 40.0 to 60.0 mole percent based on the total moles of said molecular weight controller.

**8.** The molecular weight controller recited in one of the preceding claims wherein said monofunctional organic acid is present in an amount in the range of from 15.0 to 30.0 mole percent based on the total moles of said molecular weight controller.

**9.** The molecular weight controller recited in one of the preceding claims wherein said salified amino acid is present in an amount in the range of from 20.0 to 40.0 mole percent based on the total moles of said molecular weight controller.

**10.** The molecular weight controller recited in one of the preceding claims wherein said monofunctional primary amine is benzylamine, said monofunctional organic acid is acetic acid, and said salified amino acid is 4-(aminomethyl)cyclohexanecarboxylic acid salified with p-toluenesulfonic acid or 4-(aminomethyl)benzoic acid salified with p-toluenesulfonic acid.

**11.** A process of preparing a polyamide by polymerizing lactams having the formula

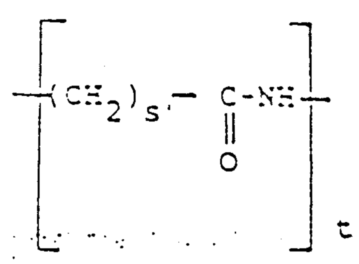

wherein
s is a positive integer and has a value from 3 to 11; and
t is a positive integer and represents the number of monomer units in the polymer required to achieve the desired molecular weight;
comprising:
adding to said lactams 30 to 100 equiv. /$10^6$ g based on the weight of the polymer of an aqueous molecular weight controller according to any of claims 1 to 10
wherein the polymerization is carried out at a temperature in the range of from 220 to 280 °C.

**12.** The process recited in Claim 11 wherein said process is continuous.

**13.** The process recited in Claim 11 or 12 wherein said amino acid is selected from the group consisting of

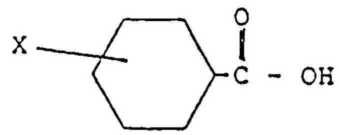

I

wherein:

X is $H_2N$- or $NH_2R^1$-, $R^1$ is methylene or ethylene, and X occupies one of the two 3 positions or the 4 position with respect to the carboxylic moiety;

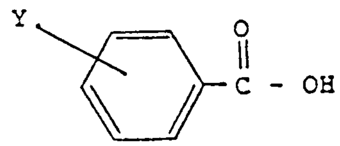

II

wherein:

Y is $H_2N$- or $NH_2R^2$-, $R^2$ is methylene or ethylene, and Y occupies the para position or one of the two meta positions with respect to the carboxylic acid moiety;

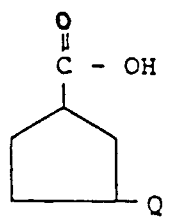

III

wherein:

Q is $H_2N$- or $H_2NR^3$- and $R^3$ is methylene, ethylene, propylene or isopropylene; and, mixtures thereof.

**14.** The process recited in one of Claims 11 to 13 wherein said salifying acid is selected from the group consisting of p-toluenesulfonic acid, naphthalenesulfonic acid, benzenesulfonic acid, 4-methylbenzene sulfonic acid, cyclohexanesulfonic acid, acetic acid, hydrochloric acid, metaphosphoric acid, orthophosphoric acid, sulfuric acid, and mixtures thereof.

**15.** The process recited in one of Claims 11 to 14 wherein said monofunctional primary amine is selected from the group consisting of nonylamine, decylamine, dodecylamine, α-phenylethylamine, β-phenylethylamine, benzylamine, and mixtures thereof.

**16.** The process recited in one of Claims 11 to 15 wherein said monofunctional organic acid is selected from the group consisting of acetic acid, propionic acid, n-butyric acid, isoburyric acid, n-valeric acid, trimethylacetic acid, caproic acid, pelargonic acid, benzoic acid, napthionic acid, and mixtures thereof.

**17.** The process recited in one of Claims 11 to 16 wherein said polyamide is selected from the group consisting of nylon 4, nylon 6, nylon 11, nylon 12, and mixtures thereof.

**18.** The process recited in Claim 17 wherein said polyamide has a number average molecular weight in the range of from 10,000 to 25,000.

**19.** The process recited in one of Claims 11 to 18 wherein said aminoacid is selected from the group consisting of trans-1,4-aminocyclohexanecarboxylic acid, cis-1,4-aminocyclohexanecarboxylic acid, trans-1,3-aminocyclohexanecarboxylic acid, cis-1,3-aminocyclohexanecarboxylic acid, cis-1-(aminomethyl)-3-cyclohexanecarboxylic acid, trans-1(aminomethyl)-3-cyclohexane-carboxylic acid, cis-1(aminoethyl)-3-cyclohexanecarboxylic acid, trans-1(aminoethyl-3-cyclohexanecarboxylic acid, cis-1-(aminomethyl)-4-cyclohexanecarboxylic acid, trans-1(aminomethyl)-4-cyclohexanecarboxylic acid, cis-1-(aminoethyl)-4-cyclohexanecarboxylic acid, trans-1(aminoethyl)-4-cyclohexanecarboxylic acid, p-aminobenzoic acid, m-aminobenzoic acid, 4-(aminomethyl)benzoic acid, 4-(aminoethyl)benzoic acid, 3-(aminomethyl)benzoic acid, 3-(aminoethyl)benzoic acid, and mixtures thereof.

**20.** The process recited in one of Claims 11 to 19 wherein said monofunctional primary amine is present in an amount in the range of from 40.0 to 60.0 mole percent based on the total moles of said monofunctional primary amine, said monofunctional organic acid; and said salified aminoacid.

**21.** The process recited in one of Claims 11 to 20 wherein said monofunctional organic acid is present in an amount in the range of from 15.0 to 30.0 mole percent based on the total moles of said monofunctional primary amine, said monofunctional organic acid, and said salified aminoacid.

**22.** The process recited in one of Claims 11 to 21 herein said salified amino acid is present in an amount in the range of from 20.0 to 40.0 mole percent based on the total moles of said monofunctional primary amine, said monofunctional organic acid, and said salified aminoacid.

**23.** The process recited in one of Claims 11 to 22 wherein said monofunctional primary amine is benzylamine, said monofunctional organic acid is acetic acid, and said salified aminoacid is 4-(aminomethyl)cyclohexanecarboxylic acid salified with p-toluenesulfonic acid or 4-(aminomethyl)benzoic acid salified with p-toluenesulfonic acid.

**24.** The process recited in one of Claims 11 to 23 wherein said molecular weight controller is present in an amount in the range of from 35 equiv/$10^6$ g to 60 equiv/$10^6$ g, based on the weight of the polymer.

**Patentansprüche**

**1.** Polyamid-Molekulargewichtsregulator, umfassend:

(a) ein monofunktionelles primäres Amin mit einem Siedepunkt von wenigstens 180 °C bei Atmosphärendruck und einer Basendissoziationskonstante von wenigstens $1{,}7 \times 10^{-5}$;

(b) eine monofunktionelle organische Säure mit einer Säuredissoziationskonstante von wenigstens $1{,}5 \times 10^{-5}$; und

(c) eine Aminosäure, enthaltend eine cyclische Struktur von 5 oder 6 Kohlenstoffatomen, eine Gesamtzahl von Kohlenstoffatomen im Bereich von 6 bis 9 und deren Aminogruppe mit einer monofunktionellen Säure, welche eine Säuredissoziationskonstante von wenigstens $1{,}0 \times 10^{-2}$ hat, ein Salz bildet.

**2.** Der Molekulargewichtsregulator nach Anspruch 1, worin die Aminosäure ausgewählt ist aus

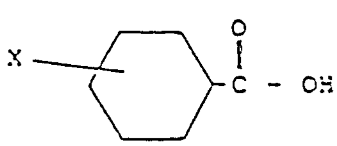

(I)

worin

X $H_2N$- oder $NH_2R^1$- ist, $R^1$ Methylen oder Ethylen ist und X eine der beiden 3-Positionen oder die 4-Position bezüglich der Carbonsäurekomponente besetzt;

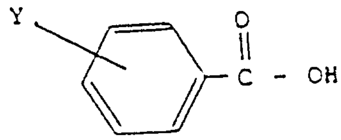

(II)

worin:
Y $H_2N$- oder $NH_2R^2$- ist, $R^2$ Methylen oder Ethylen ist und Y die Paraposition oder eine der beiden Metapositionen bezüglich der Carbonsäurekomponente besetzt;

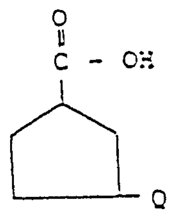

(III)

worin:
Q $H_2N$- oder $H_2NR^3$- ist und $R^3$ Methylen, Ethylen, Propylen oder Isopropylen ist und Mischungen davon.

**3.** Der Molekulargewichtsregulator nach Anspruch 1 oder 2, worin die Salz-bildende Säure ausgewählt ist aus der Gruppe, die aus p-Toluolsulfonsäure, Naphthalinsulfonsäure, Benzolsulfonsäure, 4-Methylbenzolsulfonsäure, Cyclohexansulfonsäure, Essigsäure, Chlorwasserstoffsäure, Metaphosphorsäure, Orthophosphorsäure, Schwefelsäure und Mischungen davon besteht.

**4.** Molekulargewichtsregulator nach einem der vorhergehenden Ansprüche, worin das monofunktionelle primäre Amin ausgewählt ist aus der Gruppe, die aus Nonylamin, Decylamin, Dodecylamin, $\alpha$-Phenylethylamin, $\beta$-Phenylethylamin, Benzylamin und Mischungen davon besteht.

**5.** Molekulargewichtsregulator nach einem der vorhergehenden Ansprüche, worin die monofunktionelle organische Säure ausgewählt ist aus der Gruppe, die aus Essigsäure, Propionsäure, n-Buttersäure, Isobuttersäure, n-Valeriansäure, Trimethylessigsäure, Capronsäure, Benzoesäure, Pelargonsäure, Naphthionsäure und Mischungen davon besteht.

**6.** Molekulargewichtsregulator nach einem der Ansprüche 2 bis 5, worin die Aminosäure ausgewählt ist aus der Gruppe, die aus trans-1,4-Aminocyclohexancarbonsäure, cis-1,4-Aminocyclohexancarbonsäure, trans-1,3-Aminocyclohexancarbonsäure, cis-1,3-Aminocyclohexancarbonsäure, cis-1(Aminomethyl)-3-cyclohexancarbonsäure, trans-1(Aminomethyl)-3-cyclohexancarbonsäure, cis-1(Aminoethyl)-3-cyclohexancarbonsäure, trans-1(Aminoethyl)-3-cyclohexancarbonsäure, cis-1(Aminomethyl)-4-cyclohexancarbonsäure, trans-1(Aminomethyl)-4-cyclohexancarbonsäure, cis-1(Aminoethyl)-4-cyclohexancarbonsäure, trans-1(Aminoethyl)-4-cyclohexancarbonsäure, p-Aminobenzoesäure, m-Aminobenzoesäure, 4-(Aminomethyl)benzoesäure, 4-(Aminoethyl)benzoesäure, 3-(Aminomethyl)benzoesäure, 3-(Aminoethyl)-benzoesäure, und Mischungen davon besteht.

**7.** Molekulargewichtsregulator nach einem der vorhergehenden Ansprüche, worin das monofunktionelle primäre Amin in einer Menge im Bereich von 40,0 bis 60,0 Mol-%, basierend auf der Gesamtmolzahl des Molekulargewichtsregulators vorliegt.

**8.** Molekulargewichtsregulator nach einem der vorhergehenden Ansprüche, worin die monofunktionelle organische Säure in einer Menge im Bereich von 15,0 bis 30,0 Mol-%, basierend auf der Gesamtmolzahl des Molekulargewichtsregulators vorliegt.

**9.** Molekulargewichtsregulator nach einem der vorhergehenden Ansprüche, worin die in ein Salz übergeführte Aminosäure in einer Menge im Bereich von 20,0 bis 40,0 Mol-%, basierend auf der Gesamtmolzahl des Molekulargewichtsregulators vorliegt.

**10.** Molekulargewichtsregulator nach einem der vorhergehenden Ansprüche, worin das monofunktionelle primäre Amin Benzylamin ist, die monofunktionelle organische Säure Essigsäure ist und die in ein Salz übergeführte Aminosäure 4-(Aminoethyl)cyclohexancarbonsäure, welche mit p-Toluolsulfonsäure in ein Salz übergeführt ist oder 4-(Aminoethyl)benzoesäure ist, welche mit p-Toluolsulfonsäure in ein Salz übergeführt ist.

**11.** Verfahren zur Herstellung eines Polyamids durch Polymerisation von Lactamen mit der Formel

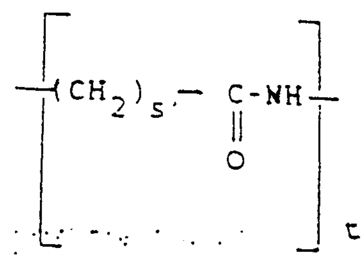

worin:
s eine positive ganze Zahl ist und einen Wert von 3 bis 11 besitzt und
t eine positive ganze Zahl ist und die Anzahl der Monomereinheiten in dem Polymer bedeutet, die erforderlich ist, um das gewünschte Molekulargewicht zu erreichen;
umfassend die Zugabe von 30 bis 100 Äquivalenten/$10^6$ g, basierend auf dem Gewicht des Polymers eines wäßrigen Molekulargewichtsregulators nach einem der Ansprüche 1 bis 10 zu den Lactamen, worin die Polymerisation bei einer Temperatur im Bereich von 220 bis 280 °C ausgeführt wird.

**12.** Prozeß nach Anspruch 11, worin das Verfahren kontinuierlich ist.

**13.** Prozeß nach Anspruch 11 oder 12, worin die Aminosäure ausgewählt ist aus der Gruppe, die aus

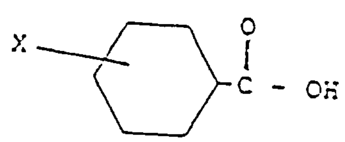

(I)

worin:
X $H_2N$- oder $NH_2R^1$- ist, $R^1$ Methylen oder Ethylen ist und X eine der beiden 3-Positionen oder die 4-Position bezüglich der Carbonsäurekomponente besetzt;

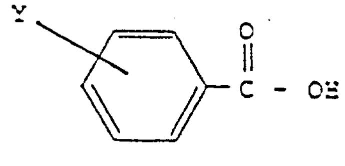

(II)

worin:
Y $H_2N$- oder $NH_2R^2$- ist, $R^2$ Methylen oder Ethylen ist und Y die Paraposition oder eine der beiden

Metapositionen bezüglich der Carbonsäurekomponente besetzt;

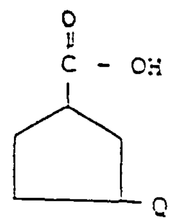

(III)

worin:
Q $H_2N$- oder $H_2NR^3$- ist und $R^3$ Methylen, Ethylen, Propylen oder Isopropylen ist und Mischungen davon besteht.

**14.** Verfahren nach einem der Ansprüche 11 bis 13, worin die Salz-bildende Säure ausgewählt ist aus der Gruppe, die aus p-Toluolsulfonsäure, Naphthalinsulfonsäure, Benzolsulfonsäure, 4-Methylbenzolsulfonsäure, Cyclohexansulfonsäure, Essigsäure, Chlorwasserstoffsäure, Metaphosphorsäure, Orthophosphorsäure, Schwefelsäure und Mischungen davon besteht.

**15.** Verfahren nach einem der Ansprüche 11 bis 14, worin das monofunktionelle primäre Amin ausgewählt ist aus der Gruppe, die aus Nonylamin, Decylamin, Dodecylamin, α-Phenylethylamin, β-Phenylethylamin, Benzylamin und Mischungen davon besteht.

**16.** Verfahren nach einem der Ansprüche 1 bis 15, worin die monofunktionelle organische Säure ausgewählt ist aus der Gruppe, die aus Essigsäure, Propionsäure, n-Buttersäure, Isobuttersäure, n-Valeriansäure, Trimethylessigsäure, Capronsäure, Pelargonsäure, Benzoesäure, Naphthionsäure und Mischungen davon besteht.

**17.** Verfahren nach einem der Ansprüche 1 bis 16, worin das Polyamid ausgewählt ist aus der Gruppe, die aus Nylon 4, Nylon 6, Nylon 11, Nylon 12 und Mischungen davon besteht.

**18.** Verfahren nach Anspruch 17, worin das durchschnittliche Molekulargewicht des Polyamids eine Zahl im Bereich von 10.000 bis 25.000 ist.

**19.** Verfahren nach einem der Ansprüche 11 bis 18, worin die Aminosäure ausgewählt ist aus der Gruppe, die aus trans-1,4-Aminocyclohexancarbonsäure, cis-1,4-Aminocyclohexancarbonsäure, trans-1,3-Aminocyclohexancarbonsäure, cis-1,3-Aminocyclohexancarbonsäure, cis-1(Aminomethyl)-3-cyclohexancarbonsäure, trans-1(Aminomethyl)-3-cyclohexancarbonsäure, cis-1(Aminoethyl)-3-cyclohexancarbonsäure, trans-1(Aminoethyl)-3-cyclohexancarbonsäure, cis-1(Aminomethyl)-4-cyclohexancarbonsäure, trans-1-(Aminomethyl)-4-cyclohexancarbonsäure, cis-1(Aminoethyl)-4-cyclohexancarbonsäure, trans-1-(Aminoethyl)-4-cyclohexancarbonsäure, p-Aminobenzoesäure, m-Aminobenzoesäure, 4-(Aminomethyl)-benzoesäure, 4-(Aminoethyl)benzoesäure, 3-(Aminomethyl)benzoesäure, 3-(Aminoethyl)benzoesäure, und Mischungen davon besteht.

**20.** Verfahren nach einem der Ansprüche 11 bis 19, worin das monofunktionelle primäre Amin in einer Menge im Bereich von 40,0 bis 60,0 Mol-%, basierend auf den Gesamtmolzahl des monofunktionellen primären Amins, der monofunktionellen organischen Säure und der in ein Salz übergeführten Aminosäure vorliegt.

**21.** Verfahren nach einem der Ansprüche 11 bis 20, worin die monofunktionelle organische Säure in einer Menge im Bereich von 15,0 bis 30,0 Mol-%, basierend auf den Gesamtmolzahl des monofunktionellen primären Amins, der monofunktionellen organischen Säure und der in ein Salz übergeführten Aminosäure vorliegt.

**22.** Verfahren nach einem der Ansprüche 11 bis 21, worin die in ein Salz übergeführte Aminosäure in einer Menge im Bereich von 20,0 bis 40,0 Mol-%, basierend auf der Gesamtmolzahl des monofunktionellen primären Amins, der monofunktionellen organischen Säure und der in ein Salz übergeführten Aminosäure vorliegt.

**23.** Verfahren nach einem der Ansprüche 11 bis 22, worin das monofunktionelle primäre Amin Benzylamin ist, die monofunktionelle organische Säure Essigsäure ist und die in ein Salz übergeführte Aminosäure 4-(Aminomethyl)cyclohexancarbonsäure, welche mit p-Toluolsulfonsäure in ein Salz übergeführt ist oder 4-(Aminomethyl)benzoesäure ist, welche mit p-Toluolsulfonsäure in ein Salz übergeführt ist.

**24.** Verfahren nach einem der Ansprüche 11 bis 23, worin der Molekulargewichtsregulator in einer Menge im Bereich von 35 Äquivalenten/$10^6$ g bis 60 Äquivalente/$10^6$ g, basierend auf dem Gewicht des Polymers, vorliegt.

**Revendications**

**1.** Agent régulateur de la masse moléculaire d'un polyamide, comprenant:
(a) une amine primaire monofonctionnelle ayant un point d'ébullition d'au moins 180 °C à la pression atmosphérique et une constante de dissociation basique d'au moins 1,7 x $10^{-5}$;
(b) un acide organique monofonctionnel ayant une constante de dissociation acide d'au moins 1,5 x $10^{-5}$; et
(c) un aminoacide contenant une structure cyclique de 5 ou 6 atomes de carbone, un nombre total d'atomes de carbone compris entre 6 et 9, et dont le groupe amino est salifié par un acide monofonctionnel ayant une constante de dissociation acide d'au moins 1,0 x $10^{-2}$.

**2.** Agent régulateur de masse moléculaire selon la revendication 1, dans lequel ledit aminoacide est choisi parmi

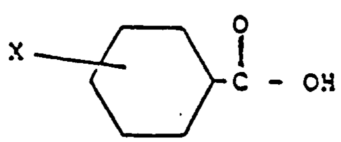

I

où X est $H_2N$- ou $NH_2R^1$-, $R^1$ est un méthylène ou un éthylène, et X occupe l'une des deux positions 3 ou la position 4 par rapport à la partie acide carboxylique;

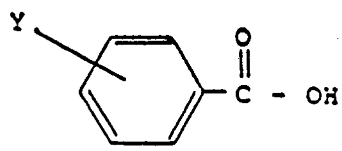

II

où Y est $H_2N$- ou $NH_2R^2$-, $R^2$ est un méthylène ou un éthylène, et Y occupe la position para ou l'une des deux positions méta par rapport à la partie acide carboxylique;

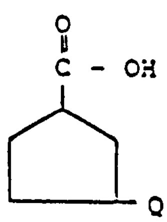

III

où Q est $H_2N$- ou $NH_2R^3$-, $R^3$ est un méthylène, un éthylène, un propylène ou un isopropylène; et leurs mélanges.

**3.** Agent régulateur de masse moléculaire selon la revendication 1 ou 2, dans lequel ledit acide salifiant est choisi dans le groupe constitué par l'acide p-toluènesulfonique, l'acide naphtalènesulfonique, l'acide

benzènesulfonique, l'acide 4-méthylbenzènesulfonique, l'acide cyclohexanesulfonique, l'acide acétique, l'acide chlorhydrique, l'acide métaphosphorique, l'acide orthophosphorique, l'acide sulfurique et leurs mélanges.

**4.** Agent régulateur de masse moléculaire selon l'une des revendications précédentes, dans lequel ladite amine primaire monofonctionnelle est choisie dans le groupe constitué par la nonylamine, la décylamine, la dodécylamine, l'$\alpha$-phényléthylamine, la $\beta$-phényléthylamine, la benzylamine et leurs mélanges.

**5.** Agent régulateur de masse moléculaire selon l'une des revendications précédentes, dans lequel ledit acide organique monofonctionnel est choisi dans le groupe constitué par l'acide acétique, l'acide propionique, l'acide n-butyrique, l'acide isobutyrique, l'acide n-valérique, l'acide triméthylacétique, l'acide caproïque, l'acide pélargonique, l'acide benzoïque, l'acide naphtionique et leurs mélanges.

**6.** Agent régulateur de masse moléculaire selon l'une des revendications 2 à 5, dans lequel ledit aminoacide est choisi dans le groupe constitué par l'acide trans-1,4-aminocyclohexanecarboxylique, l'acide cis-1,4-aminocyclohexanecarboxylique, l'acide trans-1,3-aminocyclohexanecarboxylique, l'acide cis-1,3-aminocyclohexanecarboxylique, l'acide cis-1-(aminométhyl)-3-cyclohexanecarboxylique, l'acide trans-1-(aminométhyl)-3-cyclohexanecarboxylique, l'acide cis-1-(aminoéthyl)-3-cyclohexanecarboxylique, l'acide trans-1-(aminoéthyl)-3-cyclohexanecarboxylique, l'acide cis-1-(aminométhyl)-4-cyclohexanecarboxylique, l'acide trans-1-(aminomethyl)-4-cyclohexanecarboxylique, l'acide cis-1-(aminoéthyl)-4-cyclohexanecarboxylique, l'acide trans-1-(aminoéthyl)-4-cyclohexanecarboxylique, l'acide p-aminobenzoïque, l'acide m-aminobenzoïque, l'acide 4-(aminométhyl)benzoïque, l'acide 4-(aminoéthyl)benzoïque, l'acide 3-(aminométhyl)benzoïque, l'acide 3-(aminoéthyl)benzoïque, et leurs mélanges.

**7.** Agent régulateur de masse moléculaire selon l'une des revendications précédentes, dans lequel ladite amine primaire monofonctionnelle est présente en une quantité comprise entre 40,0 et 60,0 % en moles par rapport au nombre total de moles dudit agent régulateur de masse moléculaire.

**8.** Agent régulateur de masse moléculaire selon l'une des revendications précédentes, dans lequel ledit acide organique monofonctionnel est présent en une quantité comprise entre 15,0 et 30,0 % en moles par rapport au nombre total de moles dudit agent régulateur de masse moléculaire.

**9.** Agent régulateur de masse moléculaire selon l'une des revendications précédentes, dans lequel ledit aminoacide salifié est présent en une quantité comprise entre 20,0 et 40,0 % en moles par rapport au nombre total de moles dudit agent régulateur de masse moléculaire.

**10.** Agent régulateur de masse moléculaire selon l'une des revendications précédentes, dans lequel ladite amine primaire monofonctionnelle est la benzylamine, ledit acide organique monofonctionnel est l'acide acétique, et ledit aminoacide salifié est l'acide 4-(aminoéthyl)cyclohexanecarboxylique salifié avec l'acide p-toluènesulfonique ou l'acide 4-(aminométhyl) benzoïque salifié avec l'acide p-toluènesulfonique.

**11.** Procédé de préparation, par polymérisation de lactames, d'un polyamide ayant la formule

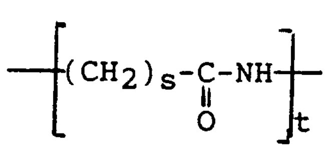

dans laquelle

s est un entier positif et a une valeur de 3 à 11; et

t est un entier positif et représente le nombre de motifs monomères requis dans le polymère pour que soit atteinte la masse moléculaire désirée;

comprenant:

l'addition auxdits lactames de 30 à 100 équivalents/$10^6$ g, par rapport à la masse du polymère, d'un agent régulateur de masse moléculaire aqueux selon l'une quelconque des revendications 1 à 10,

la polymérisation étant effectuée à une température comprise entre 220 et 280 ° C.

**12.** Procédé selon la revendication 11, dans lequel ledit procédé est continu.

**13.** Procédé selon la revendication 11 ou 12, dans lequel ledit aminoacide est choisi dans le groupe constitué par

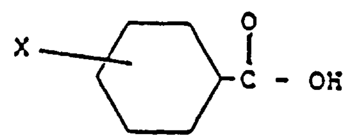

I

où X est $H_2N$- ou $NH_2R^1$-, $R^1$ est un méthylène ou un éthylène, et X occupe l'une des deux positions 3 ou la position 4 par rapport à la partie acide carboxylique;

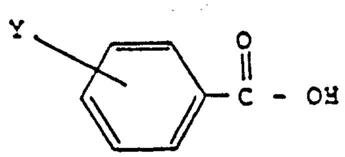

II

où Y est $H_2N$- ou $NH_2R^2$-, $R^2$ est un méthylène ou un éthylène, et Y occupe la position para ou l'une des deux positions méta par rapport à la partie acide carboxylique;

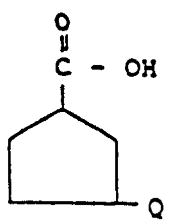

III

où Q est $H_2N$- ou $NH_2R^3$-, $R^3$ est un méthylène, un éthylène, un propylène ou un isopropylène; et leurs mélanges.

**14.** Procédé selon l'une des revendications 11 à 13, dans lequel ledit acide salifiant est choisi dans le groupe constitué par l'acide p-toluènesulfonique, l'acide naphtalènesulfonique, l'acide benzènesulfonique, l'acide 4-méthylbenzènesulfonique, l'acide cyclohexanesulfonique, l'acide acétique, l'acide chlorhydrique, l'acide métaphosphorique, l'acide orthophosphorique, l'acide sulfurique et leurs mélanges.

**15.** Procédé selon l'une des revendications 11 à 14, dans lequel ladite amine primaire monofonctionnelle est choisie dans le groupe constitué par la nonylamine, la décylamine, la dodécylamine, l'α-phényléthylamine, la β-phényléthylamine, la benzylamine et leurs mélanges.

**16.** Procédé selon l'une des revendications 11 à 15, dans lequel ledit acide organique monofonctionnel est choisi dans le groupe constitué par l'acide acétique, l'acide propionique, l'acide n-butyrique, l'acide isobutyrique, l'acide n-valérique, l'acide triméthylacétique, l'acide caproïque, l'acide pélargonique, l'acide benzoïque, l'acide naphtionique et leurs mélanges.

**17.** Procédé selon l'une des revendications 11 à 16, dans lequel ledit polyamide est choisi dans le groupe constitué par le nylon 4, le nylon 6, le nylon 11, le nylon 12, et leurs mélanges.

**18.** Procédé selon la revendication 17, dans lequel ledit polyamide a une masse moléculaire moyenne en nombre comprise entre 10 000 et 25 000.

**19.** Procédé selon l'une quelconque des revendications 11 à 18, dans lequel ledit aminoacide est choisi dans le groupe constitué par l'acide trans-1,4-aminocyclohexanecarboxylique, l'acide cis-1,4-aminocyclohexanecarboxylique, l'acide trans-1,3-aminocyclohexanecarboxylique, l'acide cis-1,3-aminocyclohexanecarboxylique, l'acide cis-1-(aminométhyl)-3-cyclohexanecarboxylique, l'acide trans-1-(aminométhyl)-3-cyclohexanecarboxylique, l'acide cis-1-(aminoéthyl)-3-cyclohexanecarboxylique, l'acide trans-1-(aminoéthyl)-3-cyclohexanecarboxylique, l'acide cis-1-(aminométhyl)-4-cyclohexanecarboxylique, l'acide trans-1-(aminométhyl)-4-cyclohexanecarboxylique, l'acide cis-1-(aminoéthyl)-4-cyclohexanecarboxylique, l'acide trans-1-(aminoéthyl)-4-cyclohexanecarboxylique, l'acide p-aminobenzoïque, l'acide m-aminobenzoïque, l'acide 4-(aminométhyl)benzoïque, l'acide 4-(aminoéthyl)benzoïque, l'acide 3-(aminométhyl)benzoïque, l'acide 3-(aminoéthyl)benzoïque, et leurs mélanges.

**20.** Procédé selon l'une des revendications 11 à 19, dans lequel ladite amine primaire monofonctionnelle est présente en une quantité comprise entre 40,0 et 60,0 % en moles par rapport au nombre total de moles de ladite amine primaire monofonctionnelle, dudit acide organique monofonctionnel et dudit aminoacide salifié.

**21.** Procédé selon l'une des revendications 11 à 20, dans lequel ledit acide organique monofonctionnel est présent en une quantité comprise entre 15,0 et 30,0 % en moles par rapport au nombre total de moles de ladite amine primaire monofonctionnelle, dudit acide organique monofonctionnel et dudit aminoacide salifié.

**22.** Procédé selon l'une des revendications 11 à 21, dans lequel ledit aminoacide salifié est présent en une quantité comprise entre 20,0 et 40,0 % en moles par rapport au nombre total de moles de ladite amine primaire monofonctionnelle, dudit acide organique monofonctionnel et dudit aminoacide salifié.

**23.** Procédé selon l'une des revendications 11 à 22, dans lequel ladite amine primaire monofonctionnelle est la benzylamine, ledit acide organique monofonctionnel est l'acide acétique, et ledit aminoacide salifié est l'acide 4-(aminométhyl)cyclohexanecarboxylique salifié avec l'acide p-toluènesulfonique ou l'acide 4-aminométhylbenzoïque salifié avec l'acide p-toluènesulfonique.

**24.** Procédé selon l'une des revendications 11 à 23, dans lequel ledit agent régulateur de masse moléculaire est présent en une quantité comprise entre 35 équivalents/$10^6$ g et 60 équivalents/$10^6$ g, par rapport à la masse du polymère.